# EUROPEAN PATENT APPLICATION

(11) **EP 2 963 415 A1**
(43) Date of publication of application: **06.01.2016**
(21) Application number: 15171748.5
(22) Date of filing: 11.06.2015
(51) Int. Cl.: G01N 27/90

(54) **APPARATUS AND CIRCUIT FOR AN ALTERNATIG CURRENT FIELD MEASUREMENT**

(30) Priority: 03.07.2014 GB 201411932
(71) Applicant: Technical Software Consultants Limited, Buckinghamshire MK5 8PB (GB)
(72) Inventor: PARRAMORE, David, Milton Keynes, Buckinghamshire MK5 8PB (GB); LUGG, Martin, Milton Keynes, Buckinghamshire MK5 8PB (GB)
(74) Representative: Potter, Julian Mark

(57) **Abstract**

Apparatus for an alternating current field measurement (ACFM) probe is disclosed. The apparatus comprises an arrangement for generating a magnetic field for inducing an alternating current field in a conductor; a sensor element arranged to produce a signal responsive to the alternating current field; and a compensator element arranged to compensate for an influence of the generated magnetic field in the signal responsive to the alternating current field.

## Description

### FIELD

The present invention relates to an apparatus and a circuit arrangement, in particular, but not exclusively, to an apparatus and circuit arrangement for an alternating current field measurement (ACFM) probe.

### BACKGROUND

ACFM is used in the non-destructive testing of conductive materials (a so called "test piece" or "inspection piece") for defects such as, for example, surface breaking cracks, and other fractures and discontinuities that may occur within the material. The technique has particular application in detecting and sizing surface breaking cracks in ferrite steel structures without requiring access to or contact with the clean (so-called "bright") metal surface. Therefore, the technique removes the need to carry out extensive pre-cleaning of the area to be inspected or the removal of protective paint layers, for example.

In general outline, the technique works by the probe inducing a small alternating current in the surface of a sample or test piece of metal. The current flow is relatively linear in the locality of the probe sensor for an unbroken surface of the test piece when a substantially uniform induction magnetic field is generated by the probe. The induction magnetic field is configured to be substantially uniform in at least a region corresponding to a sensor. The depth of penetration of the alternating current, also known as "skin depth", is dependent on the conductivity and permeability of the test piece as well as the frequency of the alternating current. In ferrous steel for a current alternating at 5 kHz the skin depth is the order of 0.1-0.2 mm.

A defect, such as a surface breaking crack, when present under the probe will distort the induced current flow and hence the induced electric field. As a consequence, the magnetic field generated by the induced electric field (induced magnetic field) will be distorted. Therefore, the probe will output a different signal compared to when the probe is over an area of the surface where no cracks are present.

The applicant has disclosed in European patent application publication number EP 0566624 an ACFM system for inducing an alternating signal current and having sensors comprising first and second coils located in a probe. A yoke is included in the probe for inducing uniform a field in a first direction with the first coil disposed so that a longitudinal axis thereof extends in the first direction. The second coil is positioned so that its longitudinal axis extends in a second direction orthogonal to the first direction. A processor is also included for processing signals produced by the coils indicative of defects in a test piece such that one component of magnetic field is plotted against another on a display.

However, known ACFM probes, such as, for example, the ACFM probe disclosed in EP0566624 are sensitive to the distance of the probe from the surface of the metal as the deviations in the signal due to the defect become smaller with increasing distance between the test piece and the bright surface of the metal. Consequently, defects may be difficult to detect or become undetectable through a thick coating, for example, a coating of more than 4-5 mm in thickness.

Aspects and embodiments of the present invention were devised with the foregoing in mind.

### SUMMARY

Viewed from a first aspect, there is provided apparatus for an alternating current field measurement (ACFM) probe, the apparatus comprising_an arrangement for generating a magnetic field for inducing an alternating current field in a conductor, a sensor element arranged to produce a signal responsive to the alternating current field and a compensator element arranged to compensate for an influence of the generated magnetic field in the signal responsive to the alternating current field.

One or more embodiments in accordance with the first aspect provide an apparatus for an ACFM probe which is less sensitive to the height of the ACFM probe above a conductor, which may otherwise be known as an inspection piece. The increased height of the ACFM probe above the conductor may be due to a coating, such as paint, applied to the surface of the conductor. One or more embodiments may enable an ACFM probe to be used on conductors which may be coated with thicker coatings than previously was the case as the influence of the induced magnetic field, which is likely to dominate the ACFM measurements where thicker coatings are used on inspection pieces, is compensated for. The use of the ACFM probe comprising an apparatus in accordance with the first aspect removes the need for the coating to be removed from the inspection piece prior to inspection using the ACFM probe.

The height of the ACFM probe above the conductor is the height of the sensor above a surface of the conductor. The surface of the conductor provides a useful datum and in this regard it should be understood that the surface of the conductor from which the height is measured is in effect a "nominal" surface smoothing out minor variations in the surface profile. However, defects can be detected with a depth of 2-3 mm even with height variations of similar or the same magnitude.

One or more embodiments have particular application in non-destructive testing in which the signal is indicative of a defect in the conductor. The reduced sensitivity to the height of the ACFM probe comprising the apparatus above the conductor according to the one or more embodiments means that defects can be detected in conductors which have been coated with thicker coatings. Typically, the apparatus, or an ACFM probe comprising the apparatus, may be moved across the conductor. However, the apparatus, or an ACFM probe comprising the apparatus, may also remain stationary and the conductor may be moved relative to the apparatus.

Optionally, or additionally, one or more embodiments may comprise apparatus having compensator elements that are offset relative to the arrangement for inducing an alternating current field in the conductor. For example, a compensator element may be oriented in the same plane as the induced field, i.e. the sensitive axis lies in the X-Y plane). It is then rotated around its Z access so that it still lies in the X-Y plane but the sensitive axis is moved away from the X direction towards the Y direction. The amount of rotation depends on the distance of the compensation coil above the inducer relative to the absolute coil below the inducer. Such apparatus may enable the height of the apparatus to be reduced as the compensator coil, by virtue of its offset orientation relative to the arrangement for inducing an alternating current field in the conductor, can be moved closer to the arrangement for inducing an alternating current field in the conductor yet produce an output that corresponds to the signal generated by the sensor element in an equivalent position to that of the sensor element and oriented in the same orientation as the sensor element. The compensator element may be less sensitive to a magnetic field than the sensor element.

In one or more embodiments, the apparatus may comprise compensation circuitry arranged to compensate for a signal corresponding to output from the compensator element in the signal responsive to the alternating current field to provide a compensated signal output. The compensation circuitry may be arranged to subtract the signal corresponding to output from the compensator element from the signal responsive to the alternating current field to provide the compensated signal output. The compensation circuitry may comprise a differential amplifier arranged to receive the signal corresponding to output from the compensator element at a first input and the signal responsive to the alternating current field at a second input.

Such apparatus means that the compensation element and the sensor element do not have to be wired in series. This reduces the complexity of the wiring inside the ACFM probe as the compensation element and the sensor element do not need to be wired together but simply wired to the compensation circuitry.

In one or more embodiments, the apparatus may comprise compensation circuitry comprising switch circuitry operative to switch between the compensated signal output and the signal responsive to the alternating current field. The switch circuitry may comprise a 2:1 multiplexer configured to receive the signal responsive to the alternating current and the compensated signal output at respective inputs. The apparatus may comprise plural sensor elements and the circuitry further comprise input switch circuitry coupled to an input of the compensation circuitry. The input switch circuitry may be configured to receive plural input signals responsive to the alternating current from each of the plural sensor elements, the input switch circuitry controllable to switch a one of the plural signals to the input of the compensation circuitry.

The apparatus may further comprise plural compensation elements and compensation input switch circuitry coupled to an input of the compensation circuitry. The compensation input switch circuitry is configured to receive plural compensation signals one from each of the plural compensation elements. The compensation input switch circuitry is also controllable to switch a one of the plural compensation signals to the input of the compensation circuitry. Such switch circuitry allows the apparatus to be switched between "raw output", that is, output from the sensor elements without compensation for the effect of the height of the apparatus above the inspection piece, and "compensated output", that is, output from the sensor elements which has had compensation applied. Apparatus comprising such circuitry is more flexible and more usable as it can be used on conductors with thicker coatings and on conductors with coatings that are thin or on conductors that have no coating.

In one or more embodiments, the apparatus may comprise a trapezoidal shaped inducer element.

Such a trapezoidal inducer provides an increased level of induction to the conductor under examination and allows a broader space above the poles of the inducer in which to house the probe electronics within the inducer body.

### LIST OF FIGURES

One or more embodiments in accordance with the present invention will now be described, by way of example only, and with reference to the following figures in which:
Figure 1 is a schematic illustration of an apparatus for an ACFM probe in accordance with an embodiment of the present invention;
Figure 2 is a schematic illustration of a compensation circuit in accordance with an embodiment of the present invention;
Figure 3a is a schematic illustration of an apparatus for an ACFM probe comprising multiple sensor coils and multiple compensation coils;
Figure 3b is a schematic illustration of a compensation circuit in accordance with an embodiment of the present invention;
Figure 4a illustrates an apparatus for an ACFM probe comprising a compensator coil which is offset relative to the inspection piece in accordance with an embodiment of the present invention;
Figure 4b illustrates a top side view of an apparatus for an ACFM probe comprise a compensator coil which if offset relative to the inspection piece in accordance with an embodiment of the present invention;
Figure 5 is a schematic illustration of an apparatus in accordance with an embodiment of the present invention wherein the induction coil is arranged to provide optimal induction; and
Figure 6 is a schematic illustration of switch circuitry in accordance with an embodiment of the present invention.

### DESCRIPTION

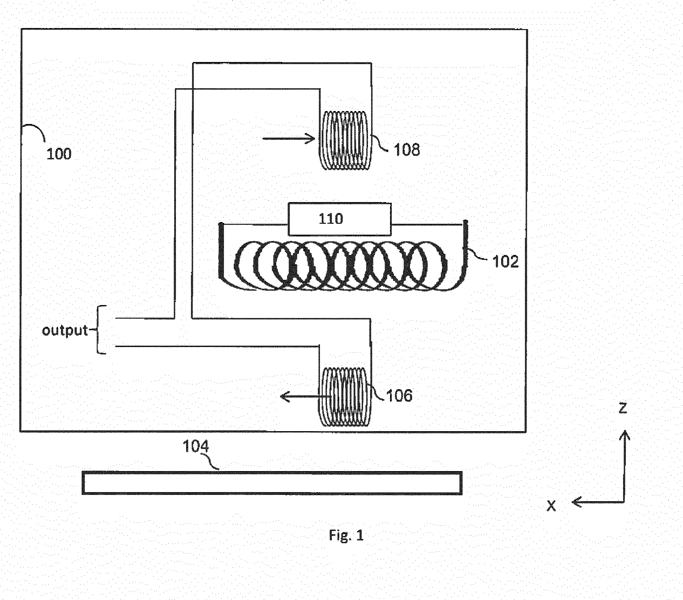

An apparatus for an ACFM probe, and the use thereof, in accordance with an embodiment of the present invention will now be described with reference to figure 1 of the drawings.

ACFM probe 100 is placed above an inspection piece 104. The ACFM probe comprises an induction coil, inducer 102, arranged to generate a magnetic field which induces an alternating current field in the inspection piece 104. The inducer 102 is driven by a circuit 110 that delivers a constant peak-to-peak current amplitude in the inducer 102. Inducer 102 is configured to produce a substantially uniform magnetic field at least in the region of a sensor coil 106.

The alternating current field in the inspection piece 104 generates an induced magnetic field in the vicinity of the inspection piece 104.

The sensor coil 106 is arranged to respond to the induced magnetic field by producing an alternating current signal indicative of the strength of the induced magnetic field. Deviations in the induced magnetic field, for example caused by defects in the inspection piece 104, will result in a deviation in the alternating current signal produced by the sensor coil 106 thereby indicating the presence of a defect in the test piece 104.

If the distance between the inspection piece 104 and the ACFM apparatus 100 is relatively large, i.e. greater than 4-5 mm, so-called "high lift off", then deviations in the induced magnetic field are dominated or even swamped by the induction magnetic generated by the inducer 102. The effect of this is that the alternating current signal produced by the sensor coil 106 is dominated by contributions from the induction magnetic field generated by inducer 102 and the contribution to the alternating current signal from deviations in the induced field, i.e. contributions due to defects in the inspection piece, are relatively negligible and are not discernible by the apparatus. That is to say, at high lift off, the sensitivity of the apparatus to defects in the inspection piece 104 is reduced.

In order to compensate for the contribution of the induction field in the alternating current signal produced by the sensor coil 106, a compensator coil 108 may be provided.

The compensator coil 108 is placed above the inducer 102 at a distance equal to the distance between the inducer 102 and the sensor coil 106.

The compensator coil 108 is wired in series with the sensor coil 106. The alternating current signal 106 and that generated in the compensator coil 108 are superimposed onto each other to form a composite alternating current signal which is fed to output 114which simply forms the composite alternating current into a signal suitable for interfacing with electronic instrumentation such as data processing circuitry graphically display an image representative of the composite alternating current. Optionally or additionally a hardcopy printout of the composite alternating current may be provided in real time. Signals representative of the composite alternating current may be stored for future graphical representation or analysis.

As the compensator coil 108 and the sensor coil 106 are equidistantly positioned relative to the inducer 102, the contribution from the induction magnetic field generated by the inducer 102 to the alternating current signal generated in the compensator coil 108 is substantially identical to the contribution from the induction field generated by the inducer 102 to the alternating current signal produced by the sensor coil 106 but of opposite polarity.

Since the alternating currents respectively generated in sensor coil 106 and compensator coil 108 are due to what is a substantially equal influence of the induction magnetic field and are of opposite polarity the respective contributions due to the influence of the induction magnetic field cancel each other out. That is to say, that respective contributions destructively interfere with each other to form a composite signal in which the influence of the induction magnetic field is substantially removed leaving primarily the influence due to the induced magnetic field.

The effect of using the compensatory coil 108 is that, even at relatively high lift off, the apparatus 100 can detect defects in the inspection piece 104 and at the very least the apparatus 100 sensitivity to defects in the inspection piece 104 is improved.

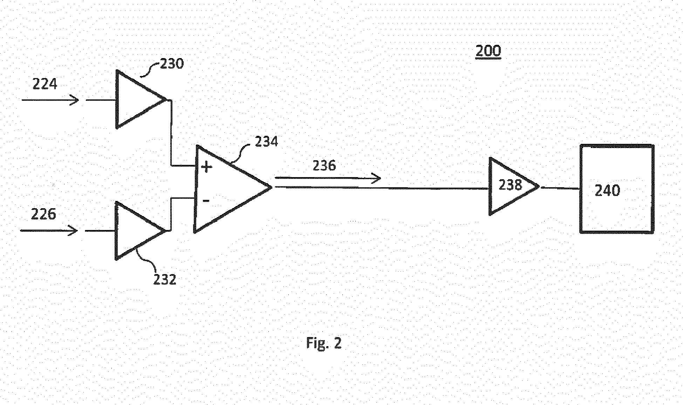

The sensor coil 106 and the compensatory coil 108 do not have to be wired together. A second embodiment in accordance with an aspect with an aspect of the present invention, will now described with reference to figure 2 and in which compensation for the influence of the induction field generated by the inducer coil 102 on the sensor coil 106 is provided by compensatory coil 108 without the two coils being wired together.

Apparatus 100 can be reconfigured in accordance with a second embodiment such that sense coil 106 and compensation coil 108 are not connected together and instead have respective outputs.

Figure 2 illustrates compensation circuitry 200 arranged for receiving from the output 114a sense signal 224 from sensor coil 106 and a compensation signal 226 from compensation coil 108.

The sense signal 224 and the compensation signal 226 are respectively fed to respective gain elements 230 and 232 where voltage gain is applied to the sense signal 224 and the compensation signal 226. The gain elements 230 and 232 are configured to provide equal voltage gain to the sense signal 224 and the compensation signal 226. The voltage gain is applied to the sense signal 224 and the compensation signal 226 to compensate for the voltage drop that is inherent in the apparatus 100.

The voltage gain modified sense signal 224 and the voltage gain modified compensation signal 226 are fed to the respective positive polarity input and negative polarity input of a differential amplifier 234.The differential amplifier is arranged to amplify the difference between the voltage gain modified sense signal 224 and the voltage gain modified compensation signal 226. Typically, the differential amplifier 234 is configured with a common-mode gain that is as close to zero as is practically possible and a common-mode rejection ratio, i.e. the ratio between the differential-mode gain and the common-mode gain, that is as high as is practically possible. The common-mode gain and the common-mode rejection ratio may be set by the skilled person according to the standard manufacturing and engineering tolerances that form the constraints for the skilled person implementing the apparatus. Establishing the common-mode gain and the common-mode rejection ratio can be achieved using methods that will be evident to the skilled person.

Responsive to receiving the gain modified sense signal 224 and compensation signal 226, the differential amplifier 234 outputs a difference (or compensated) signal 236 representative of the difference between the input sense signal 224 and compensation signal 226. The difference between the input sense signal 224 and compensation signal 226 is due to the contribution to the input sense signal from the sense coil due to the alternating current in the inspection piece 208. The differential amplifier subtracts the compensation signal 226 from input sense signal 224 which results in the difference signal 236. The difference signal 236 is dominated by contributions from the induced magnetic field around the inspection piece 104 In other words, as the influence of the induction magnetic field produced by the inducer coil 102 has been removed from the sense signal 224 to produce the compensated signal 236. The only contributions to the compensated signal 236 are due to contributions from the induced magnetic field that is generated by the alternating current in inspection piece 208.

It will be evident to persons of ordinary skill in the art that as is usual with differential amplifier configurations, a small residual element of either the sensor signal 224 or compensation signal 226 may be found in the output from the differential amplifier and so the difference or compensated signal 236 is not an exact compensated signal although may be considered to be so within the realms of manufacturing and analytical tolerances. The compensated signal 236 is fed to a gain element 238 which applies voltage gain to the compensated signal 236. The application of voltage gain places the signal into a form that will be useful for electronic instrumentation circuitry 240, inter alia, to display the compensated output of ACFM probe to indicate a defect in the inspection piece. As described previously with respect to the first embodiment, the electronic instrumentation circuitry 240 may provide a real-time output to a display screen or a printer or optionally or additionally store the compensated ACFM probe values output for analysis later. For example, the output may be fed to conventional instrument electronics, such as filters and phase shift detection as described in the applicant's co-pending UK patent application 1405650.1

In a third embodiment an ACFM probe using a differential amplifier similar to the second embodiment comprises multiple (N) sensor coils 304a to 304d (in this example N=4) and multiple compensator coils 306a to 306d. Each sensor coil 304a to 304d is electrically connected in series to a respective compensator coil 306a to 306d to form sensor coil/compensator coil pairs in a manner similar to the sensor coil 106/compensator coil 108 pair illustrated in figure 1.

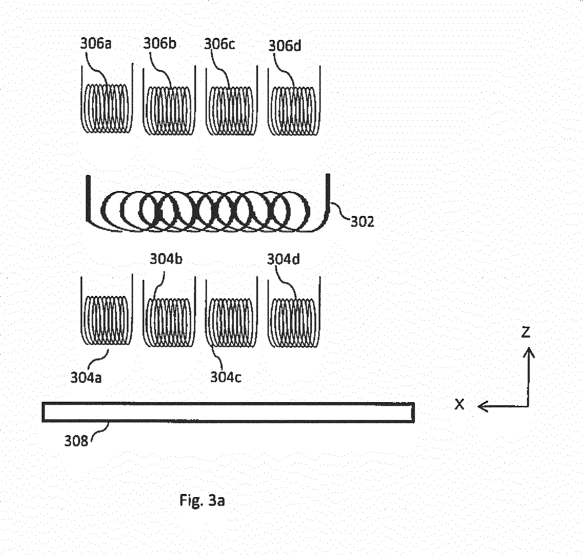

Figure 3a illustrates apparatus 300 for an ACFM probe comprising multiple sensor and compensator coils. Apparatus 300 includes an inducer coil 302 arranged similarly to inducer coil 102 illustrated in figure 1 to generate an alternating current field in an inspection piece 308, sensor coils 304a to 304d and compensator coils 306a to 306d. Each sensor coil/compensator coil pair produces a compensated signal in a similar fashion to the sensor coil 106/compensator coil 108 of the embodiment illustrated with reference to figure 1. An ACFM probe comprising apparatus 300 may provide greater granularity and sensitivity in detecting small defects over a wide area at a substantially similar time than would be the case if a larger single sense coil were used. Additionally, respective coil pairs 304/306 may be movable, preferably resiliently so, in a direction away from test piece 308 thereby providing compensation or account of physical irregularities in inspection piece 308. In such a scenario, account may be taken of the non-equal separation of the sense coil from the induction coil when compared with the separation of the compensator coil from the induction coil. Optionally, no account could be taken and a small element of the induction field not being compensated for by the inequality being accepted if it only reduce sensitivity of the sensor/probe by a small amount.

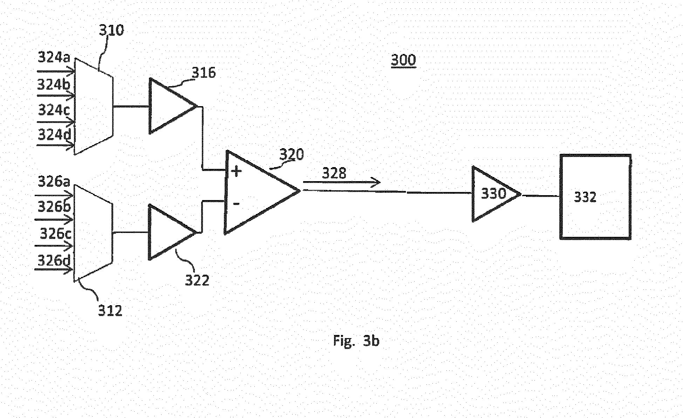

As is the case for the second embodiment described with reference to the compensation circuitry of figure 2, the coils provided in apparatus 300 need not be coupled together in sensor/compensator coil pairs. Instead, the outputs from respective sensor coils 304a to 304d and compensator coils 306a to 306d pairs may be fed to a compensation circuit 300 illustrated in figure 3b,

The compensation circuit 300 comprises a first multiplexer 310 arranged for receiving the output from the four (N=4) sensor coils 304a to 304d and selecting a sense signal 324 from the four feeds from the sensor coils 304a to 304d for processing using the compensation circuit 300; and a second multiplexer 312 arranged for receiving four (N=4) feeds from four compensator coils 306a to 306d and selecting a compensation signal 326 from the four feeds.

Multiplexer 310 receives, as inputs 324 a to d, the output from sensor coils 304 a- 304d and in response to a select signal selects a one of the sense signals, 324a say, from the inputs to multiplexer 310.

Multiplexer 310 is arranged to feed sense signal 324a to a gain element 316 to produce an amplified signal which is then fed to the positive polarity input of differential amplifier 320. Differential amplifier 320 is configured similarly to differential amplifier 234. The second multiplexer 312 is arranged to receive, as inputs 326 a to d, the output from compensator coils 306a - 306d and to feed a selected compensation signal, 326a say, to a gain element 322. Gain element 322 and gain element 316 are configured to provide substantially equal voltage gain to ensure that consistency is maintained between the signals input from the first and second multiplexers. Gain element 322 applies voltage gain to the compensation signal 326 which is then fed to the negative polarity input of differential amplifier 320. Typically the gain for this stage is set to 1 although in other embodiments other gains could be used. Additional programmable gain stages later in the processing chain, e.g. within the instrument, may obviate a need for additional gain at this stage although gain could be added in this stage if an application so required.

Differential amplifier 320 performs the same operation as differential amplifier 234 illustrated in figure 2 and outputs a signal 328 indicative of a difference between respective input signals, i.e. signal 324 representative of a sensor coil output and signal 326 representative of a corresponding compensator coil output. The difference signal is output to a gain element 330 which formats the signal into a form suitable for use with electronic instrumentation 332, such as for display or print out from or storage in the electronic instrumentation.

As with the compensation circuitry described with reference to figure 2, the difference signal represents almost solely the induced magnetic field caused by the alternating current in the inspection piece 308.

Although not shown, it will be evident to a person of ordinary skill in the art that multiplexer 310 and multiplexer 312 may be synchronised so the select input is clocked at the same rate and for the same input to ensure that corresponding sensor coil outputs and compensation coil outputs are coupled to respective inputs of differential amplifier 320. The clocking of the select input for each of multiplexer 310 and 312 may be provided by a simple free running oscillator or the select input maybe clocked under the control of data processing circuitry, such as may be found in the electronic instrumentation 332.

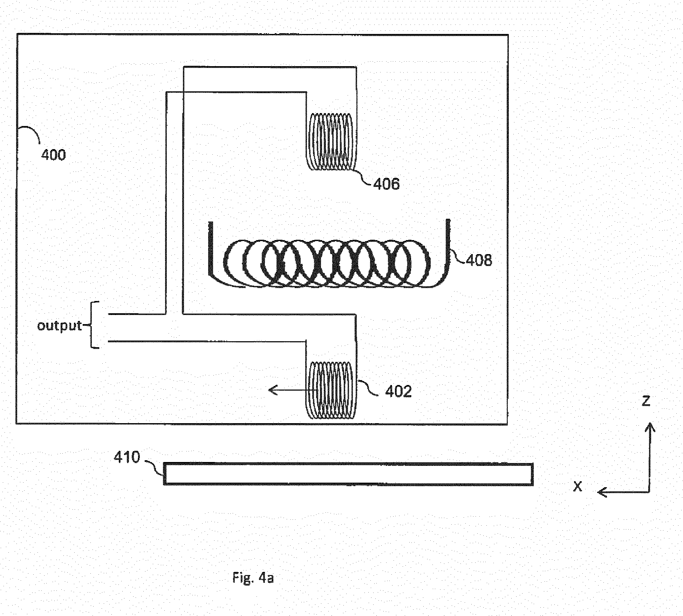

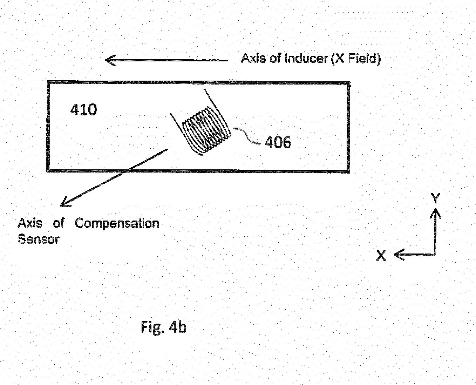

We now describe another embodiment including an apparatus 400 for an ACFM probe wherein the compensator coil 406 is offset relative to the inspection piece as schematically illustrated in Figures 4a and 4b.

Apparatus 400 comprises a sensor coil 402 which, in the illustrative example given here, is wired in series to a compensator coil 406. However, the sensor coil 402 does not have to be wired in series to the compensator coil 406. Optionally, the sensor coil 402 and compensator coil 406 are not wired together and their respective outputs are coupled to a compensation circuit 200 as described in Figure 3b.

As illustrated in Figure 4a, the apparatus 400 comprises an inducer coil 408 arranged to induce an alternating current field in an inspection piece 410. The inducer coil 408 is configured in a similar fashion to the inducer coil 102 and 302 described previously.

However, as illustrated in Figure 4b, the compensator coil 406 is oriented such that its primary axis is in a direction transverse to the primary axis of the inducer coil 408 in that it is rotated in the z-plane. This orientation of the compensator coil 406 may be described as "offset" relative to the inspection piece 410 under examination.

In this regard, it should be noted that the purpose of orienting the compensator coil 406 in this respect is to be able to move it closer to the inducer coil yet produce an output that would correspond to the signal generated by the sensor coil in an equivalent position to that of the sense coil and oriented in the same orientation as the sense coil. A similar effect may be achieved by reducing the number of individual coils in the compensator coil 406. With fewer coils compensator coil 406 may be moved closer to the inducer coil 408 into a region of greater magnetic field strength.

The effect of moving the compensator coil 406 is to reduce the overall height of the apparatus.

Whether configured for an offset orientation or a reduced number of coils for the compensator coil 406, the sense coil 402 and compensator coil 406 need not be wired in series but may have their respective outputs coupled to the circuitry such as described with reference to figure 2 of the drawings. Likewise, should multiple pairs of offset compensator coil and a sense coil be provided in a probe then their respective outputs may be coupled to the inputs of respective multiplexers of the circuitry described with reference to figure 3b.

Multiple sensor coils 402 and multiple compensator coils 406 may be used in an arrangement similar to that described with reference to figure 3a.

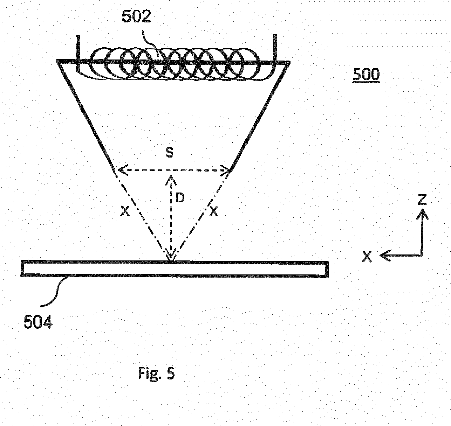

Optionally or additionally, the inducer element may be trapezoidal in shape. An example of a trapezoidal inducer for an ACFM probe will now be described with reference to Figure 5.

A trapezoidal shaped inducer 502 provides an increased level of induction to the inspection piece 504 under examination. Optimal induction may be obtained when the separation S of the ends of the inducer 502 are of similar dimension to the target working lift-off D. The angle of the sides of the inducer 502 should be such that the extrapolation of the sides X should meet at the surface of the inspection piece 504.

The Applicant has found empirically that for a 30mm liftoff probe that a trapezoidal arrangement of ACFM field is suitable, partly because it leaves a larger envelope within the field to house probe electronics. However, the shape is somewhat application dependent, since the Applicant has found that a probe configured for a 12mm liftoff proved to be optimal with a more conventional rectangular field shape.

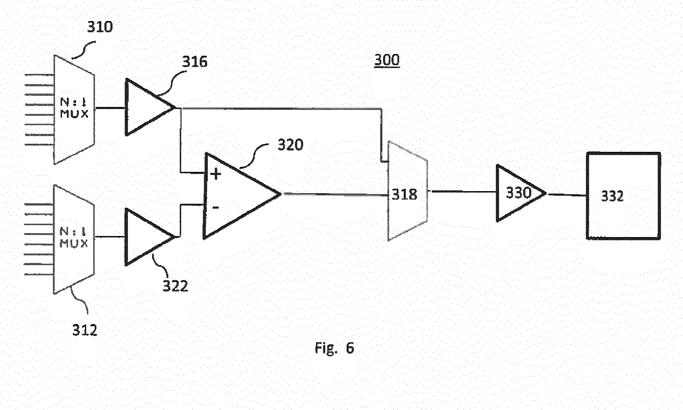

In another embodiment, the differential amplifier arrangement described in Figure 3b may be modified to include a third multiplexer 318 as illustrated in figure 6. The third multiplexer is operative in an on or off state and is arranged to receive input from the output of gain element 316 or the output of differential amplifier 320. The third multiplexor 318 output is coupled to the gain element 330.

The third multiplexer 318 is powered on and is arranged to select between the output from the gain element 316, the "raw output", and the output from the differential amplifier, the "compensated output". If the raw output is selected the display of the ACFM probe will display the output from the sensor coil without any compensation. If the compensated output is selected then the display of the ACFM probe will display the compensated output.

The on state may be responsive to a user indicating, for example through a user interface on electronic instrumentation controlling the ACFM probe, that the probe is in "high lift off mode". If high lift off mode is indicated then the compensated output may be selected. High lift mode may be indicated if the user deems it appropriate due, for example, to prior knowledge of the thickness of a coating applied to the conductor before examination using the ACFM probe. For example, each probe, including all the applicant's conventional ACFM probes, may have a configuration file, typically in the instrumentation, containing a number of operating configurations. The operator selects the desired configuration from the list and the instrument and software are automatically adjusted appropriately.

Optionally, the third multiplexer 318 may be configured to select signals from the gain element 316, i.e. raw output, for passing through to the output of the third multiplexor 316. The selection of the raw output may be responsive to a user interface input that the probe is in "standard mode". Standard mode may be selected if the user deems it appropriate if, for example, prior knowledge indicates that no coating or a coating of negligible thickness has been applied to the conductor before examination using the ACFM probe.

The effect of the "high lift off' and "standard" modality of the third multiplexer is that the probe may be used to output raw or compensated signals without a different probe needing to be used.

Although the third multiplexer 318 has been described and illustrated in combination with multiplexers 310 and 312 for receiving signals from respective groups of sensor coils and compensator coils, multiplexers 310 and 312 need not be used if only a single sense coil and compensator coil are to be used. If just a single sense coil and compensator coil but are utilised then their outputs may be respectively input to gain element 316 and gain element 312.

Insofar as embodiments of the invention described above are implementable, at least in part, using a software-controlled programmable processing device such as a general purpose processor or special-purposes processor, digital signal processor, microprocessor, or other processing device, data processing apparatus or computer system it will be appreciated that a computer program for configuring a programmable device, apparatus or system to implement the foregoing described methods, apparatus and system is envisaged as an aspect of the present invention. The computer program may be embodied as any suitable type of code, such as source code, object code, compiled code, interpreted code, executable code, static code, dynamic code, and the like. The instructions may be implemented using any suitable high-level, low-level, object-oriented, visual, compiled and/or interpreted programming language, such as C, C++, Java, BASIC, Perl, Matlab, Pascal, Visual BASIC, JAVA, ActiveX, assembly language, machine code, and so forth. A skilled person would readily understand that term "computer" in its most general sense encompasses programmable devices such as referred to above, and data processing apparatus and computer systems.

Suitably, the computer program is stored on a carrier medium in machine readable form, for example the carrier medium may comprise memory, removable or non-removable media, erasable or non-erasable media, writeable or re-writeable media, digital or analog media, hard disk, floppy disk, Compact Disk Read Only Memory (CD-ROM), Company Disk Recordable (CD-R), Compact Disk Rewriteable (CD-RW), optical disk, magnetic media, magneto-optical media, removable memory cards or disks, various types of Digital Versatile Disk (DVD) subscriber identity module, tape, cassette solid-state memory. The computer program may be supplied from a remote source embodied in the communications medium such as an electronic signal, radio frequency carrier wave or optical carrier waves. Such carrier media are also envisaged as aspects of the present invention.

As used herein any reference to "one embodiment" or "an embodiment" means that a particular element, feature, structure, or characteristic described in connection with the embodiment is included in at least one embodiment. The appearances of the phrase "in one embodiment" or the phrase "in an embodiment" in various places in the specification are not necessarily all referring to the same embodiment.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the invention. This is done merely for convenience and to give a general sense of the invention. This description should be read to include one or at least one and the singular also includes the plural unless it is obvious that it is meant otherwise.

In view of the foregoing description it will be evident to a person skilled in the art that various modifications may be made within the scope of the invention. For example, an embodiment has been described in which the sensor coil 106 and compensator coil 108 are disposed equal distances away from the inducer coil and on opposite sides of the inducer but embodiments falling within the scope of the appended claims may have a sensor and compensator coil at different distances from the inducer coil compared to each other. Optionally, the sensor and compensator coil may be on the same side of the coil although then the coils would have to be wired connected to opposite polarity ends if wired together in series. Although embodiments in accordance with the present invention have been described with reference to the sensor head arrangement 10 illustrated in figure 1 other sensor head arrangements may be utilised. For example, multiple sense coil is may be utilised and/or multiple a.c. field generating coils. In particular, but not exclusively, sensor head arrangements such as disclosed in the applicant's prior disclosures in international patent application publication number WO 92/12422 and UK patent application publication number GB 2 286 678.

Although specific embodiments have been described using coils as sensor and compensation arrangements, other magnetic field sensors may be used such as Hall effect sensors or giant magneto resistive sensors. Electronic circuitry has also been described which may be implemented utilising large or medium scale integrated circuits or even in a microprocessor. The circuitry may be disposed in the probe and under the control of a user interface provided on electronic instrumentation for controlling the probe or by way of a simple user interface on the probe, such as a switch. It will be evident to the person of ordinary skill in the art that the processing electronics need not be disposed in the probe itself but may be in the electronic instrumentation.

Although the terms "test" and "inspection" have been used when referring to items being tested or inspected, such terms should not be considered limiting in terms of the examples and illustrations of embodiments invention that may be taught. Additionally, although specific process control flows have been described, other process control flows may be used in implementing one or more embodiments of the present invention.

The scope of the present disclosure includes any novel feature or combination of features disclosed therein either explicitly or implicitly or any generalisation thereof irrespective of whether or not it relates to the claimed invention or mitigate against any or all of the problems addressed by the present invention. The applicant hereby gives notice that new claims may be formulated to such features during prosecution of this application or of any such further application derived therefrom. In particular, with reference to the appended claims, features from dependent claims may be combined with those of the independent claims and features from respective independent claims may be combined in any appropriate manner and not merely in specific combinations enumerated in the claims.

## Claims

1. Apparatus for an alternating current field measurement (ACFM) probe, the apparatus comprising:
an arrangement for generating a magnetic field for inducing an alternating current field in a conductor;
a sensor element arranged to produce a signal responsive to the alternating current field; and
a compensator element arranged to compensate for an influence of the generated magnetic field in the signal responsive to the alternating current field.

2. Apparatus according to Claim 1, wherein the compensator element is offset relative to the arrangement for inducing an alternating current field in a conductor.

3. Apparatus according to Claim 1 or 2, wherein the compensator element is less sensitive to a magnetic field than the sensor element.

4. Apparatus according to Claim 2 or 3, wherein the compensator element is disposed closer to the arrangement for generating a magnetic field than the sensor element.

5. Apparatus according to any preceding Claim, wherein the compensator element is electrically connected in series to the sensor element.

6. Apparatus according to Claim 5, wherein the compensator element is electrically coupled to the sensor element in reverse polarity.

7. Apparatus according to any of Claims 1 to 4, further comprising circuitry including compensation circuitry arranged to compensate for a signal corresponding to output from the compensator element in the signal responsive to the alternating current field to provide a compensated signal output.

8. Apparatus according to Claim 7, wherein the compensation circuitry is arranged to subtract the signal corresponding to output from the compensator element from the signal responsive to the alternating current field to provide the compensated signal output.

9. Apparatus according to Claim 8, wherein the compensation circuitry comprises a differential amplifier arranged to receive the signal corresponding to output from the compensator element at a first input and the signal responsive to the alternating current field at a second input.

10. Apparatus according to any of Claims 7 to 9, wherein the circuitry further comprises switch circuitry operative to switch between the compensated signal output and the signal responsive to the alternating current field.

11. Apparatus according to Claim 10, wherein the switch circuitry comprises a 2:1 multiplexer configured to receive the signal responsive to the alternating current and the compensated signal output at respective inputs.

12. Apparatus according to any of Claims 10 to 11, further comprising plural sensor elements and the circuitry further comprising input switch circuitry coupled to an input of the compensation circuitry, the input switch circuitry configured to receive plural signals responsive to the alternating current one such signal from each of the plural sensor elements, the input switch circuitry controllable to switch a one of the plural signals to the input of the compensation circuitry.

13. Apparatus according to any of Claims 10 to 12, further comprising plural compensation elements and the circuitry further comprising compensation input switch circuitry coupled to an input of the compensation circuitry, the compensation input circuitry configured to receive plural compensation signals one from each of the plural compensation elements, the compensation input switch circuitry controllable to switch a one of the plural compensation signals to the input of the compensation circuitry.

14. Apparatus according to any preceding Claim, further comprising a trapezoidal shaped inducer element.

15. Apparatus according to any preceding Claim, wherein the sensor element is a sensor coil; or
is a Hall effect sensor; or
is a Giant Magneto-resistive Sensor,

16. Apparatus according to any preceding Claim, wherein the compensator element is a sensor coil; or
is a Hall effect sensor; or
is a Giant Magneto-resistive Sensor.

17. An ACFM probe comprising the apparatus of any preceding claim.

18. Circuitry for apparatus according to any of claims 1 to 17.
